(19) Europäisches Patentamt

European Patent Office

Office européen des brevets

(11) **EP 1 365 464 B1**

(12) **EUROPEAN PATENT SPECIFICATION**

(45) Date of publication and mention
of the grant of the patent:
**28.12.2005 Bulletin 2005/52**

(51) Int Cl.⁷: **H01M 8/02**, H01M 8/10

(21) Application number: **03011249.4**

(22) Date of filing: **16.05.2003**

(54) **Continuous process for manufacture of gas diffusion layers for fuel cells**

Verfahren zur kontinuierlichen Herstellung von Gasdiffusionsschichten für Brennstoffzellen

Procédé en continu pour la fabrication de couches de diffusion gazeuse pour piles à combustible

(84) Designated Contracting States:
**AT BE BG CH CY CZ DE DK EE ES FI FR GB GR
HU IE IT LI LU MC NL PT RO SE SI SK TR**

(30) Priority: **17.05.2002 EP 02011059**

(43) Date of publication of application:
**26.11.2003 Bulletin 2003/48**

(73) Proprietor: **Umicore AG & Co. KG
63457 Hanau-Wolfgang (DE)**

(72) Inventors:
 • **Köhler, Joachim, Dr.
63584 Gründau/Haingründau (DE)**
 • **Wittpahl, Sandra
63179 Obertshausen (DE)**
 • **Rohland, Lutz
63457 Hanau (DE)**

(56) References cited:
**EP-A- 1 237 214          EP-A- 1 341 251
WO-A-02/059989          WO-A-03/092095
US-A- 5 399 184          US-A- 5 998 057
US-A1- 2002 197 525**

**Description**

**Field of the Invention**

The present invention relates to the field of electrochemical cells and fuel cells, more specifically to membrane fuel cells such as polymer-electrolyte-membrane fuel cells ("PEMFC") and Direct Methanol Fuel Cells ("DMFC") and describes a continuous process for the manufacture of gas diffusion layers ("GDLs") for use in membrane-electrode-assemblies ("MEAs") in fuel cells.

**Background of the Invention**

Fuel cells convert fuel and an oxidizing agent into electricity, heat and water at two spatially separated electrodes. For example, hydrogen or a hydrogen-rich gas can be used as the fuel and oxygen or air as the oxidizing agent. The energy conversion process in fuel cells is distinguished by particularly high efficiency. For this reason, fuel cells are gaining increasing importance as alternatives to conventional combustion engines. They may also be used in stationary combined-heat-and-power units ("CHP" units) as well as in portable applications.

The membrane fuel cells, particularly the PEMFC and the Direct Methanol Fuel Cell (DMFC, a variation of the PEMFC, powered by methanol directly instead of hydrogen) are suitable for use as energy converters due to their compact construction, their power density and high efficiency. The technology of Fuel Cells is broadly described in the literature, see for example K. Kordesch and G. Simader, Fuel Cells and its applications, VCH Verlag Chemie, Weinheim (Germany) 1996.

In the following section, the technical terms and phrases that are used in the present patent application, are described in greater detail:

A "catalyst-coated membrane" ("CCM") consists of a polymer electrolyte membrane that is provided on both sides with a catalytically active layer. One of the layers takes the form of an anode for the oxidation of hydrogen, and a second layer takes the form of a cathode for the reduction of oxygen. As the CCM consists of three layers (anode catalyst, membrane and cathode catalyst layer), it is often referred to as "3-layer MEA".

"Gas diffusion layers" ("GDLs"), sometimes referred to as gas diffusion substrates, backings or gas diffusion electrodes ("GDEs") are placed onto the anode and cathode layers of the CCM in order to bring the gaseous reaction media (hydrogen and air) to the catalytically active layers, and at the same time, to establish an electrical contact. GDLs are usually carbon-based substrates, such as carbon fiber paper or woven carbon fabric, which are highly porous and allow the reaction gases to have a good access to the electrodes. Furthermore, in general they should be hydrophobic in order to remove the water product of the fuel cell. GDLs can be coated with a microlayer to improve the contact to the membrane. Furthermore, they can be coated with a catalyst layer for subsequent lamination to the ionomer membrane. These catalyst-coated GDLs are frequently referred to as catalyst-coated backings ("CCBs").

A "five-layer membrane-electrode-assembly", also known as "5-layer MEA" is the central component in a polymer-electrolyte-membrane fuel cell (PEMFC) and consists of five layers: The anode GDL, the anode catalyst layer, the ionomer membrane, the cathode catalyst layer and the cathode GDL. An MEA can be manufactered by combining a CCM with two GDLs (one on the anode and one on the cathode side) or, alternatively, by combining an ionomer membrane with two catalyzed GDLs (one on the anode and one on the cathode side).

PEMFC and DMFC stacks are built up from these MEAs by stacking numerous individal MEAs and bipolar plates onto each other.

The polymer electrolyte membrane consists of proton-conducting polymer materials. These materials are also referred to below as ionomers. Preferred ionomers include but are not limited to tetrafluoroethylene-fluorovinyl ether copolymer with sulfonic acid groups. E.I. du Pont markets this material under the trade name Nafion®. Other ionomer materials, such as fluorine-free, sulfonated polyether ketones or aryl ketones or polybenzimidazoles may also be used. Suitable ionomer materials are described by O. Savadogo in "Journal of New Materials for Electrochemical Systems" I, 47-66 (1998). For use in membrane fuel cells, the ionomer membranes generally have a thickness of between about 10 and about 200 $\mu$m.

The anode and cathode layers contain electrocatalysts, which catalyze the oxydation of hydrogen at the anode and reduction of oxygen at the cathode. The platinum group metals are preferably as the catalytically active components. Additionally, supported catalysts, in which nano-sized particles of the catalytically active platinum group metals have been fixed to the surface of a conductive support material are preferred. The average particle size of the platinum group metal is between about 1 and 10 nm. Carbon blacks with particle sizes of from about 10 to about 50 nm and high electrical conductivity are suitable as support materials.

Generally, two different technologies exist for the production of membrane-electrode assemblies:

In the first method, CCM-technology, the catalyst layers are applied directly to the ionomer membrane resulting in a catalyst-coated membrane (CCM). This technology is descibed, for example, in EP 1 037 295 B 1 and EP 1 176 652 A2.

In the second method, CCB-technology, the catalyst layers are applied to the gas diffusion layers ("GDLs") first. Subsequently, two gas diffusion layers are assembled by means of heat and pressure with the ionomer membrane to yield a 5-layer MEA. This process is also referred to as hot pressing or lamination. This technology is described in US 4,876,115.

Unfortunately, MEAs manufactured by laminating catalyzed anode and cathode GDLs onto both sides of a ionomer membrane are often prone to high hydrogen leakage rates. This is due to pinhole formation occurring during the lamination process, which is performed at high pressures and high temperatures. Generally, the surface of the GDL is very rough. Vertically oriented carbon fibers and needles, which peak out of the carbon substrate as well as sharp debris or coarse particle at the surface of the GDL substrate can penetrate or perforate the ionomer membrane creating pinholes and thin areas. The pinholes and/or thinned membrane areas lead to an increased hydrogen crossover from the anode to the cathode side. In addition to a loss of hydrogen efficiency, this leads to a drop of the cell voltage and in turn can significantly reduce the performance of the MEA. Furthermore, the pinhole formation may lead to a significantly reduced operation time and durability of MEAs and PEMFC stacks produced therefrom.

WO 01/04980 A1 discloses a gas diffusion electrode for electrochemical cells based on low-cost manufacturing processes. Graphitized fiber web structures with a high through-plane conductivity are used. The structures are impregnated with solutions of thermoplastic resins, preferably phenolic resins. A calendering process is following the impregnation of the GDL, wherein the web structure is usually heated to temperatures up to 250°C. This heated calendering step is applied to dry the impregnated material, melt or cure the impregnation agent and to keep the calendered material at the desired final thickness. After the calendering step, a heating treatment in a furnace at temperatures up to 1200°C is described as a final step. The problems of pinhole formation and broad parameter variations are still present when one uses these GDLs in MEA manufacture.

In JP 2001-85019A, a manufacturing method of electrodes for PEMFC is disclosed. After the application of a water-repellent carbon layer (i.e. microlayer), the surface of the gas diffusion layer ("GDL") is flattened by applying a hot pressing step. This hot pressing step is performed in a discontinuous batch process, its use in a continuous high volume series production of MEAs is not feasible. Furthermore, parameters describing the surface roughness were not given.

In EP 868 760 B1 and EP 1 042 837 B1, continuous methods for manufacturing of laminated MEAs are disclosed. No details are given in respect to an additional hot rolling/compression process of the GDL to improve the performance and quality of the MEAs produced according to the claimed processes.

Thus, there remains a need to develop ways to produce more efficient membrane-electrode assemblies. The present invention addresses this problem by providing an improved process for manufacturing of gas diffusion layers (GDLs).

## Summary of the invention

The present invention refers to the MEA manufacturing technology previously described and discloses a continuous process for manufacture of improved GDLs. The materials are used for manufacture of 5-layer MEAs.

It was the object of the invention, described herein and defined in the appended claims, to create a continuous manufacturing method for GDLs, which leads to products with low surface roughness. By use of these improved GDL products, the damage and pinhole formation of ionomer membranes in subsequent MEA assembly is prevented. The manufacturing method described in this invention comprises a continuous compression process.

In summary, the present invention provides a process for manufacture of improved GDL materials characterized by a low surface roughness of the microlayer /catalyst layer in a continuous process with high production speed.

The term "surface roughness" hereby refers to the GDL surface, which is contacted with the ionomer membrane surface in subsequent MEA assembly process. Depending on the GDL manufacturing route, this surface can be the microlayer coated surface, the catalyst layer coated surface or the combined microlayer/catalyst coated surface of the GDL. For the sake of clarity, the surface of the GDL, which is not in contact with the ionomer membrane in the subsequent MEA assembly process, is not contemplated.

Surface roughness measurements are performed according to EN ISO 4287 using a "Perthometer Type PGK 20", manufactured by Mahr GmbH, Brauweg 38, 37073 Goettingen/Germany. The total roughness ("$R_t$") is given by the following equation:

$$R_t = R_p + R_v$$

In this equation (ref. to Article 4.1 in ISO 4287/1998), the peak roughness Rp is the height of the highest peak in the roughness profile over the evaluation lenght ($l_t$). Similarly, $R_v$ is the depth of the deepest valley in the roughness profile.

The total roughness $R_t$ is the sum of these two parameters, or the vertical distance from the deepest valley to the highest peak. The parameter $R_t$ (given in microns) is used to characterize the surface profiles of the GDLs in the context of this invention. In all measurements the evaluation lenght is constant ($l_t$ = 17,5 mm). Typically, the total surface roughness ($R_t$) of the GDLs manufactured according to the process of this invention is less than 100 microns, thus indicating a high flatness of the GDL microlayer/catalyst layer surface.

As a degree for the damage and/or perforation of the ionomer membrane, the open cell voltage ("OCV") of a MEA is used herein. This parameter is detected in a regular PEMFC single cell measurement by connecting the cell to the feed gases hydrogen (on the anode) and air (on the cathode side), without applying a load. This means that no current is delivered by the cell (i.e. at a current density of 0 mA/cm$^2$). MEAs manufactured with the improved GDLs according to this invention are characterized by a high open cell voltage (OCV), a low hydrogen crossover as well as a high performance.

## Detailed description of preferred embodiments

Specifically, the invention provides a process for manufacturing a gas diffusion layer for use in membrane electrode assemblies (MEAs), said gas diffusion layer comprises a porous carbon support with two opposing surfaces and deposited on one of these surfaces at least one layer comprising polymeric substances and electrically conductive carbon particles, wherein the gas diffusion layer is treated with a continuous compression process after the application of the at least one layer. No obtain a total surface roughness ($R_f$) of at least one layer of less than 100 microns.

The at least one layer comprising polymeric substances and electrically conductive carbon black usually is a so-called microlayer. On top of this microlayer may be deposited a catalyst layer comprising an ionomer and an electrocatalyst.

It was found that the compression process should be preferably performed after the addition of the carbon black/PTFE microlayer to the GDL. However, if an additional catalyst layer is deposited onto the microlayer, the compression process may also be performed after the application of both layers. Due to the compression process, not only the GDL substrate itself, but also the surface of the microlayer and/or of the catalyst layer is flattened and a surface with a low total roughness ($R_t$) is obtained. Vertically oriented needles or fibers from the GDL base material, which could perforate the membrane, and any coarse particles or debris contained in the microlayer are flattened. As a consequence, a high product quality as well a high production yield in the MEA production process is obtained.

The methods for applying a microlayer and/or a catalyst layer to the surface of a porous carbon support are well known to the expert. For providing the microlayer, a paste is formed from the hydrophobic polymer, e.g. polytetrafluoroethylene (PTFE), and electrically conducting carbon black. This paste is then applied to the surface of the carbon support by use of suitable continuous application techniques. Examples are brushing, spraying, doctor blading, screen printing, stencil printing, offset printing and the like.

The methods for continuously drying and/or sintering substrate materials in roll form are also well known to the expert. Conventional heat treatment devices, for example tube furnaces or tunnel furnaces of a certain lenght can be used. Appropriate heating profiles, heating atmospheres, venting conditions can be selected to obtain high throughput. For drying of the microlayer and/or the catalyst layer, temperatures in the range from 50 to 150°C are suitable. For sintering of the PTFE-containing microlayer, the temperatures should be in the range of from 200 to 400°C. After the microlayer has been sintered, the continuous compression process may be performed.

The compression process of this invention can be applied to different materials useful for GDLs, which are available in roll form. Examples are woven or non-woven carbon based substrates, e.g. carbon paper, carbon fibers, carbon cloth, carbon mesh, needled felt, knitted fabric etc. The porous carbon support may be wet proofed with PTFE before the application of the microlayer. This is done by impregnating the carbon substrate with an aqueous suspension of e.g. PTFE. The concentration of the hydrophobic polymer in the wet proofed substrate is generally between 1 and 50 mg/cm$^2$.

The compression process can be conducted by use of equipment suitable for continuous heat and/or pressure application to a substrate material. Examples are heatable rollers, heatable twin rolling devices, heatable calendering rolls, heatable rolling mills or heatable continuous lamination devices. Prefereably, the temperatures for the compression process should be in the range of 20 to 250°C. The compression forces are in the range of 10 to 1000 N/cm (linear force for compression for a roll type equipment).

The compression process can be combined with or integrated in the continuous printing processes for the microlayer and/or the catalyst layer in order to increase production speed time and to reduce complexity. Generally, by properly optimizing the continuous manufacturing line, production speeds in the range of 10 m to 500 m/min are possible. In comparison, it was found that, when using conventional hydraulic hot presses for the compression step (as described for example in JP 2001-85019A), the production speed is significantly reduced, generally to less than 5 m/min.

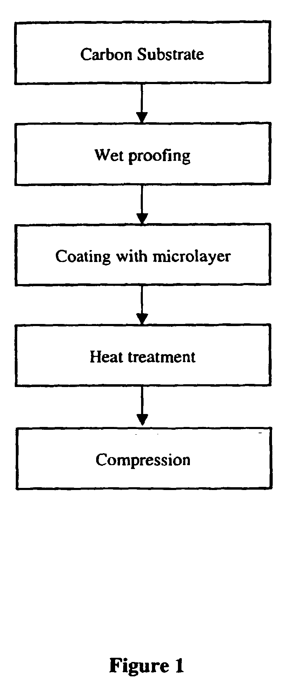

The invention is now explained in more detail with the help of **figure 1** .

**Figure 1** depicts the continuous process for GDL manufacture according to the invention. The compression step is performed after the microlayer application. The GDL substrate is provided in roll form and wet proofed by impregnation with a PTFE suspension to a PTFE-content of about 5 - 30 wt.%. After that, the microlayer (consisting of carbon black and PTFE) is applied. Following the application of the microlayer, the GDL roll is heat treated in a combined drying/sintering stage, where the solvents are removed and the PTFE components are sintered. Then the hot-rolling/compression process at temperatures of 20 to 250°C is conducted and production speeds of 10 to 500 m/min can be obtained.

In a further step (not shown), the GDL roll can be assembled directly with CCMs (catalyst-coated membranes) in a continuous process to form 5-layer MEAs. However, when using a discontinuous process, the GDL roll is cut into individual substrates prior to MEA assembly.

Furthermore, the compressed GDL roll may be coated with a thin catalyst layer by means of a catalyst ink and assembled with non-catalyzed ionomer membranes to yield 5-layer MEAs (either in a continuous or a discontinuous process). Again, when using a discontinuous process, the GDL roll is cut into individual substrates prior to the catalyst layer application and the MEA assembly.

In an alternative embodiment of the invention, the continuous compression process is conducted after microlayer application and after the application of the catalyst layer as a final step prior to the MEA assembly. The application of the catalyst layer can be performed by processes similar to those described for microlayer application and may require an additional drying step.

The following examples describe the subject of the invention in more detail without limiting the scope of the invention.

**Example 1:**

A roll of carbon fiber paper (thickness 350 microns, porosity 85%; supplied by SGL Carbon Group, type SIGRACET) is wet proofed with a water-based PTFE solution (type Hostaflon TF 5032, Dyneon, Gendorf) in a continuous coating device to a PTFE content of 9 wt.%. A microlayer, consisting of carbon black and PTFE is applied to one side of the carbon paper by screen printing by use of a roll-to-roll screen printer. The ink used for printing has the following composition:

| | |
|---|---|
| 12,0 g | carbon black Vulcan XC 72 (Cabot Inc.) |
| 52,0 g | Dipropyleneglycol |
| 25,0 g | Mowital B20H (15 wt.% in Dipropylene-n-butylether) |
| 9,0 g | Hostaflon 5032 |
| 2,0 g | water (deionized) |
| 100,0 g | |

In the next step, the GDL roll is heat-treated in a two-stage continuous tunnel furnace, in the first stage (at 120°C) to dry the ink and in the second stage (at 390°C) for sintering of the microlayer. After the sintering stage, the GDL roll is led directly into a heated rolling mill while maintaining a surface temperature of about 100°C prior to entering the slit of the rollers. The operating parameters for the hot rolling process were:

| | | |
|---|---|---|
| Temperature of rolls | 210 | °C |
| Diameter of rolls | 400 | mm |
| Rotating speed of rolls | 10 | rotations / min |
| Production speed | 12 | m / min |
| Compressive load | 140 | N / cm (linear force) |

In the compression process, the microlayer-coated GDL was flattened and any vertically oriented pins or needles in the surface were eliminated. The total surface roughness of the GDL surface (measured on top of the microlayer) is R, = 87,4 microns. The total production speed of the continuous process is 12 m/min.

Following the compression process, the GDL roll is cut into discrete sheets and the individual GDL substrates are catalyzed with inks containing platinum based electrocatalyst by means of a screen printing process. The inks used for this purpose are described in EP 1 176 652 A2. The ink containing the PtRu/C electrocatalyst is used for the anode GDL and is described in Example 2, the ink containing the Pt/C catalyst is used for the cathode side and is described in Example 1.

A 5-layer MEA is made by placing a ionomer membrane (Nafion® N112, Du-Pont) between two GDLs (forming the anode and a cathode side of the MEA) and subsequently laminating the assembly in a hot press at 150°C for 3 min at a pressure of 200 N/cm². The total precious metal loading of the MEA was 0,85 mg (Pt+Ru)/cm² (= 0,3 mg Pt/cm² and 0,15 mg Ru/cm² at the anode and 0,4 mg Pt/cm² at the cathode side).

The electrochemical test results are shown in table 1. As a result, the open cell voltage is improved.

## Comparative Example 1

The GDLs are prepared according to the continuous process described in example 1, however, the hot-rolling/compression process is omitted. The GDLs contain vertically oriented needles protruding from the carbon paper surface and coarse particles from the microlayer. The total surface roughness ($R_t$) of the microlayer is 124 microns.

As shown in table 1, the MEAs prepared with GDLs made without the hot-rolling process show a low open cell voltage (OCV) in the range of 930 mV

## Example 2

The GDLs are prepared in a continuous process according to the procedure described in example 1. Two of the non-catalyzed GDLs are cut out of the roll and combined with a catalyst coated membrane (CCM, prepared according to the technology disclosed in EP 1 037 295 B1) and a 5-layer MEA is manufactured by a lamination process. The MEA reveals a very high open cell voltage of 980 mV and improved cell performance parameters.

## Electrochemical testing

The MEAs were tested in a PEMFC single cell with active area of 50 cm² running on reformate/air conditions with simulated natural gas reformate (composition 40 vol. % hydrogen, 40 vol. % nitrogen, 20 vol% carbon dioxide, 40 ppm carbon monoxide and additional 2 vol. % air bleed). The operating gas pressure was ambient(1 bar) and the cell temperature was 70°C. The open cell voltage (OCV) was detected at zero current density drawn from the cell. As shown in table 1, the MEAs manufactured with the compressed GDLs according to the present invention reveal a high OCV value in the range of 970 - 980 mV, whereas the MEAs manufactured with regular GDLs show lower OCV's in the range of 930 mV (comparative example 1). The high OCV value is due to the markedly reduced hydrogen crossover rate in the MEAs made with GDLs according to the present invention. The typical cell voltage of the MEAs is in the range of 600 mV at current densities of 600 mA/cm².

Table 1:

| Comparison of MEAs based on standard and compressed gas diffusion layers (GDLs) | | | |
|---|---|---|---|
| | Comparative Example 1 | Example 1 | Example 2 |
| GDL Total surface roughness ($R_t$, microns) | 124 | 84 | 88 |
| MEA - Open cell voltage (OCV; mV) | 930 | 972 | 975 |
| MEA - Cell voltage (U @ 600 mA/cm²) | 603 | 597 | 602 |

## Claims

1. Process for manufacturing a gas diffusion layer for use in membrane electrode assemblies, said gas diffusion layer comprising a porous carbon support with two opposing major surfaces and deposited on one of these surfaces at least one layer comprising polymeric substances and electrically conductive carbon particles, wherein the gas diffusion layer is treated by a continuous compression process after the deposition of the at least one layer to obtain a total surface roughness ($R_t$) of the at least one layer of less than 100 microns.

2. Process according to claim 1, wherein the continuous compression process is performed by heatable rolls at compressive forces in the range from 10 to 1000 N/cm and at temperatures in the range of 20 to 250°C.

3. Process according to claim 1 or 2, wherein the production speed of the continuous compression process is in the range of 10 to 500 m/min.

4. Process according to one of claims 1 to 3, wherein the at least one layer of the gas diffusion layer is a microlayer comprising a mixture of a hydrophobic polymer and carbon black.

5. Process according to one of claims 1 to 4, wherein on top of the microlayer a catalyst layer comprising an ionomer and an electrocatalyst is deposited.

6. Process according to one of claims 1 to 5, wherein the porous carbon support comprises a woven or non-woven carbon-based substrate material in roll form.

7. Process according to one of claims 1 to 6, wherein the porous carbon support is wet-proofed by impregnation with a hydrophobic polymer before the deposition of the at least one layer.

8. Process according to one of claims 1 to 7, wherein the steps of wet-proofing the porous carbon support, coating with microlayer, heat treatment and compression are conducted continuously.

9. Gas diffusion layer for use in membrane fuel cells, wherein the total surface roughness ($R_t$) of the microlayer surface is less than 100 microns.

10. Gas diffusion layer for use in membrane fuel cells, wherein the total surface roughness ($R_t$) of the catalyst layer surface is less than 100 microns.

11. Use of the gas diffusion layers manufactured according to one of claims 1 to 8 for manufacture of membrane-electrode-assemblies.

12. Membrane-electrode-assembly for membrane fuel cells comprising a gas diffusion layer manufactured according to one of the claims 1 to 8.


**Patentansprüche**

1. Prozeß zur Herstellung einer Gasdiffusionsschicht zur Verwendung in Membran-Elektroden-Einheiten, wobei die Gasdiffusionsschicht einen porösen Kohlenstoffträger mit zwei gegenüberliegenden Hauptflächen umfaßt und auf einer dieser Oberflächen mindestens eine Schicht abgeschieden ist, die polymere Substanzen und elektrisch leitende Kohlenstoffteilchen enthält, wobei die Gasdiffusionsschicht mit einem kontinuierlichen Kompressionsprozeß nach der Abscheidung der mindestens einen Schicht behandelt wird, um eine Gesamtoberflächenrauhigkeit ($R_t$) der mindestens einen Schicht von weniger als 100 Mikrometer zu erhalten.

2. Prozeß nach Anspruch 1, wobei der kontinuierliche Kompressionsprozeß mit heizbaren Walzen mit Druckkräften im Bereich von 10 bis 1000 N/cm und bei Temperaturen im Bereich von 20 bis 250°C durchgeführt wird.

3. Prozeß nach Anspruch 1 oder 2, wobei die Produktionsgeschwindigkeit des kontinuierlichen Kompressionsprozesses im Bereich von 10 bis 500 m/min liegt.

4. Prozeß nach einem der Ansprüche 1 bis 3, wobei die mindestens eine Schicht der Gasdiffusionsschicht eine Mikroschicht ist, die eine Mischung aus einem hydrophoben Polymer und Ruß umfaßt.

5. Prozeß nach einem der Ansprüche 1 bis 4, wobei auf der Oberseite der Mikroschicht eine Katalysatorschicht aus einem Ionomer und einem Elektrokatalysator abgeschieden ist.

6. Prozeß nach einem der Ansprüche 1 bis 5, wobei der poröse Kohlenstoffträger ein gewebeförmiges oder vliesförmiges Substratmaterial auf Kohlenstoffbasis in Rollenform umfaßt.

7. Prozeß nach einem der Ansprüche 1 bis 6, wobei der poröse Kohlenstoffträger vor der Abscheidung der mindestens einen Schicht durch Imprägnierung mit einem hydrophoben Polymer wasserbeständig gemacht wird.

8. Prozeß nach einem der Ansprüche 1 bis 7, wobei die Schritte des Wasserbeständigmachens des porösen Kohlenstoffträgers, des Beschichtens mit der Mikroschicht, der Wärmebehandlung und der Kompression kontinuierlich durchgeführt werden.

9. Gasdiffusionsschicht zur Verwendung in Membranbrennstoffzellen, wobei die Gesamtoberflächenrauhigkeit ($R_t$) der Oberfläche der Mikroschicht weniger als 100 Mikrometer beträgt.

10. Gasdiffusionsschicht zur Verwendung in Membranbrennstoffzellen, wobei die Gesamtoberflächenrauhigkeit ($R_t$) der Oberfläche der Katalysatorschicht weniger als 100 Mikrometer beträgt.

11. Verwendung der nach einem der Ansprüche 1 bis 8 hergestellten Gasdiffusionsschichten zur Herstellung von Membran-Elektroden-Einheiten.

12. Membran-Elektroden-Einheit für Membranbrennstoffzellen enthaltend eine gemäß einem der Ansprüche 1 bis 8 hergestellte Gasdiffusionsschicht.

**Revendications**

1. Procédé pour fabriquer une couche de diffusion gazeuse à utiliser dans des ensembles d'électrode à membrane, ladite couche de diffusion gazeuse comprenant un support de carbone poreux présentant deux surfaces principales opposées et, déposée sur une de ces surfaces, au moins une couche comprenant des substances polymères et des particules de carbone électriquement conductrices, dans lequel la couche de diffusion gazeuse est traitée par un procédé de compression continu après le dépôt de la au moins une couche pour obtenir une rugosité de surface totale ($R_t$) de la au moins une couche inférieure à 100 microns.

2. Procédé selon la revendication 1, dans lequel le procédé de compression continu est exécuté par des cylindres chauffants à des forces de compression comprises entre 10 et 1000 N/cm et à des températures comprises entre 20°C et 250°C.

3. Procédé selon la revendication 1 ou 2, dans lequel la vitesse de production du procédé de compression continu est comprise dans la gamme allant de 10 à 500 m/min.

4. Procédé selon l'une quelconque des revendications 1 à 3, dans lequel la au moins une couche de la couche de diffusion gazeuse est une micro-couche comprenant un mélange d'un polymère hydrophobe et de noir de carbone.

5. Procédé selon l'une quelconque des revendications 1 à 4, dans lequel une couche de catalyseur comprenant un ionomère et un électrocatalyseur est déposée au-dessus de la micro-couche.

6. Procédé selon l'une quelconque des revendications 1 à 5, dans lequel le support de carbone poreux comprend une matière de substrat à base de carbone tissée ou non tissée sous forme de rouleau.

7. Procédé selon l'une quelconque des revendications 1 à 6, dans lequel le support de carbone poreux est rendu hermétique à l'eau par une imprégnation avec un polymère hydrophobe avant le dépôt de la au moins une couche.

8. Procédé selon l'une quelconque des revendications 1 à 7, dans lequel les étapes d'étanchéification du support de carbone, de revêtement avec la micro-couche, de traitement thermique et de compression sont exécutées d'une façon continue.

9. Couche de diffusion gazeuse à utiliser dans des piles à combustible à membrane, dans laquelle la rugosité de surface totale ($R_t$) de la surface de la micro-couche est inférieure à 100 microns.

10. Couche de diffusion gazeuse à utiliser dans des piles à combustible à membrane, dans laquelle la rugosité de surface totale ($R_t$) de la surface de la couche de catalyseur est inférieure à 100 microns.

11. Utilisation des couches de diffusion gazeuse selon l'une quelconque des revendications 1 à 8 pour fabriquer des ensembles d'électrode à membrane.

12. Ensemble d'électrode à membrane pour des piles à combustible à membrane comprenant une couche de diffusion gazeuse fabriquée selon l'une quelconque des revendications 1 à 8.

**Figure 1**